(19) Europäisches Patentamt

European Patent Office

Office européen des brevets

(11) Veröffentlichungsnummer: **0 318 019 B1**

(12) **EUROPÄISCHE PATENTSCHRIFT**

(45) Veröffentlichungstag der Patentschrift: **02.01.92**

(21) Anmeldenummer: **88119623.2**

(22) Anmeldetag: **24.11.88**

(51) Int. Cl.⁵: **F16L 5/02**, H02G 3/22

(54) **Vorrichtung zur wasser- und gasdichten Durchführung von langgestreckten Gegenständen durch Bauwerkswände.**

(30) Priorität: **27.11.87 DE 3740382**

(43) Veröffentlichungstag der Anmeldung:
**31.05.89 Patentblatt 89/22**

(45) Bekanntmachung des Hinweises auf die Patenterteilung:
**02.01.92 Patentblatt 92/01**

(84) Benannte Vertragsstaaten:
**AT BE CH DE FR GB IT LI LU NL SE**

(56) Entgegenhaltungen:
**EP-A- 0 240 764**
**DE-U- 8 624 869**
**DE-U- 8 800 585**

(73) Patentinhaber: **RXS Schrumpftechnik-**
**Garnituren GmbH**
**Profilstrasse 4**
**W-5800 Hagen 1(DE)**

(72) Erfinder: **Breuer, Peter, Dipl.-Ing.**
**Sonnerstrasse 24**
**W-5800 Hagen 5(DE)**
Erfinder: **Hunke, Roland, Dipl.-Ing.**
**Auf dem Loh 2**
**W-5860 Iserlohn(DE)**
Erfinder: **Winterhoff, Hans, Dipl.-Ing.**
**Seestrasse 2c**
**W-5800 Hagen 1(DE)**
Erfinder: **Hoppe, Günter**
**Am Paulshof 2**
**W-5800 Hagen(DE)**

(74) Vertreter: **Fuchs, Franz-Josef, Dr.-Ing. et al**
**Postfach 22 13 17**
**W-8000 München 22(DE)**

EP 0 318 019 B1

## Beschreibung

Die Erfindung betrifft eine wasser- und gasdichte Durchführung von langgestreckten Gegenständen, wie Rohren, elektrischen Leitungen und Kabeln, durch Bauwerkswände mit Abdichtungen zum eingeführten Gegenstand, wobei zumindest an einer Mauerseite ein die Maueröffnung abschließendes, rohrförmiges Abschlußelement angeordnet ist, das ein Rohrstück und einen senkrecht zur Achse der Maueröffnung radial nach auswärts gerichteten Ringflansch aufweist, wobei die Fläche des Ringflansches so gewählt ist, daß die Maueröffnung ringsum mit einer ein Dichtelement ausreichend überdeckenden Dichtfläche abgedeckt ist und der Ringflansch durch Druck- und/oder Arretiermittel gegen das Dichtelement und die Mauerwand gepreßt ist.

Aus der deutschen Patentschrift DE-C-1 803 726 ist eine rohrförmige Mauerdurchführung zum wasser- und gasdichten Durchführen von Leitungen und/oder Kabeln durch Bauwerkswände aus einem wärmeschrumpfenden Rohr bekannt, bei dem in seinem mittleren Teil formsteife, als Schraubenwendel ausgebildete Verstärkungsteile zur Verhinderung der vollständigen Wärmeschrumpfung angeordnet sind. Diese Mauerdurchführung wird in die Maueröffnung eingeführt und nach außen hin mit Dichtungsmittel und Mörteleinfüllungen zur Mauerwandung der Bohröffnung abgedichtet. Diese Art der Abdichtung ist sehr schwer auszuführen, da der auszustopfende Ringspalt oft sehr schmal ist, so daß das Ausfüllen mit Mörtel sehr mühsam ist, wobei die Dichtigkeit in Längsrichtung meist sehr zu wünschen übrig läßt. Dies ist besonders kritisch, da keine Kontrolle über das ordnungsgemäße Dichtstopfen möglich ist. Außerdem ist nach dem Austrocknen des Mörtels eine wasser- und gasdichte Anstrichsmasse aus geeigneten Materialien, wie zum Beispiel teerähnliche Dichtungsmittel, nötig. Dabei ist wichtig, daß jeweils nach jedem Arbeitsvorgang, das heißt nach dem Stopfen und auch nach dem Anstrich, eine entsprechende Trokkenzeit abgewartet werden muß. Dies wirkt sich auf die Montagezeiten recht unangenehm aus.

Bei dem deutschen Gebrauchsmuster DE-U-86 24 869 handelt es sich um eine Rohrkapsel für eine Mauerdurchführung mit einem Mantelrohr. Dieses Mantelrohr ist an beiden Seiten mit einem Gewinde versehen, auf die jeweils eine Wandscheibe aufgeschraubt wird. Dies hat den Nachteil, daß bei der Montage zu Beginn von zwei Seiten der Mauer her gearbeitet werden muß. Außerdem müssen alle Elemente zugfest ausgebildet sein, wobei in den Bereich der Schraubgewinde Probleme bezüglich der Dichtigkeit auftreten.

So ist Aufgabe der Erfindung, eine Durchführung von langgestreckten Gegenständen durch Mauerwände zu schaffen, die eine sichere und schnelle Abdichtung ergibt, wobei diese Abdichtung zumindest an der gefährdeten Außenseite der Maueröffnung erfolgen soll, wobei die kritischen Ringspalte vermieden werden sollen. Die gestellte Aufgabe wird mit einer Vorrichtung gemäß der Erfindung nach der eingangs erläuterten Art dadurch gelöst, daß das Rohrstück einen in die Maueröffnung ragenden zylindrischen Ansatz aufweist, daß der Ansatz als Spreizdübel ausgebildet ist und ein ins Innere des Spreizdübels eintreibbares, rohrförmiges Spreizteil aufweist, daß ein Schutzrohr innerhalb der Maueröffnung bis in das Abschlußelement reichend angeordnet ist, daß das Dichtelement zwischen dem Ringflansch und der Mauerwand angeordnet ist und daß Abdichtungen zwischen dem Abschlußelement und dem eingefügten Kabel zumindest auf der mit dem Abschlußelement versehenen Mauerseite, vorzugsweise auf der Außenseite der Mauer, vorgesehen sind.

Die Vorteile der Erfindung sind nun in erster Linie darin zu sehen, daß die in die Mauer eingebrachte Maueröffnung zur Durchführung von längsgestreckten Gegenständen zwischen dem Schutzrohr und der konzentrischen Maueröffnungswand nicht mehr mit Dichtungsmitteln, wie es bisher beim Stand der Technik der Fall war, ausgefüllt werden muß. Dies hat zur Folge, daß Unregelmäßigkeiten durch fehlerhaftes Stopfen des Dichtmittels im Ringspalt aufgrund der neuen Konstruktion der erfindungsgemäßen Vorrichtung nicht mehr auftreten können, wobei zusätzlich die sonst üblichen Aushärtezeiten für das Dichtungsmittel und für den Schutzanstrich entfallen. Bei der Abdichtung der Maueröffnung gemäß der Erfindung wird zumindest auf der kritischen Einführungsseite, meist die Außenseite, ein rohrförmiges Abschlußelement auf der bereits mit Abdichtmitteln behandelten Mauerwand aufgebracht. Das Abschlußelement besitzt dabei einen Ringflansch, der die Maueröffnung mit einem für die Abdichtung erforderlichen Überstand abschließt. Die Abdichtung zwischen dem eingeführten längsgestreckten Gegenstand, wie Leitungen, Kabel oder anderweitige Installationsrohre, erfolgt mit Hilfe von weiteren einfachen und unkompliziert anzubringenden Abdichtungen am freien Ende des rohrförmigen Abschlußelementes. Dieses Abschlußelement besteht nämlich jeweils im wesentlichen aus einem Rohrstück und einem senkrecht zur Achse des Rohrstückes bzw. der Maueröffnung radial nach außen gerichteten Ringflansch. Dieser Ringflansch wird nun bei der Montage über ein ringförmiges Dichtungselement an die Mauerwand gepreßt, wobei die Fläche des Ringflansches so bemessen ist, daß sich über die Abdeckung der Maueröffnung hinaus eine ausreichende konzentrische Dichtfläche ergibt. Die äußere Begrenzung des Ringflansches kann sowohl kreisförmig als auch eckig sein, da diese Formgebung für die Funktion unerheblich ist. Der nötige Anpreßdruck wird mit Hilfe von entsprechenden Druckmitteln aufgebracht. Wenn man das in der Maueröffnung eingebrachte Schutzrohr mit dem Abschlußelement fest verbindet, kann der erforderliche Dichtungsdruck am Ringflansch auch durch Zug am Schutzrohr auf der gegenüberliegenden Maueröffnung hergestellt werden. Durch entsprechende Arretierungen wird der Dichtungsdruck jeweils aufrechterhalten, wenn nicht aushärtende Dichtungsmittel wie Kleber und dergleichen als Dichtungsmittel verwendet werden. Durch entsprechende Weiterbildungen des in der Maueröffnung eingebrachten Schutzrohres lassen sich auch Weiterführungen auf der zweiten Seite der Mauer nach den vorliegenden Gegebenheiten, wie zum Beispiel eine abgebogene Weiterführung in ein Verteilergehäuse, entsprechend herstellen.

Die Erfindung wird nun durch entsprechende Merkmale anhand von 13 Figuren näher erläutert.

Figur 1    zeigt eine dichtende Verkeilung des Schutzrohres in der Maueröffnung.

Figur 2    verdeutlicht Befestigungsmittel für das Abschlußelement.

Figur 3    zeigt die Frontansicht des Abschlußelements nach Figur 2.

Figur 4    zeigt die Befestigung des Abschlußelementes mit Hilfe einer dübelartigen Ausbildung im Maueröffnungsbereich.

Figur 5    verdeutlicht das im Abschlußelement nach Figur 4 verwendete Dübelteil.

Figur 6    zeigt eine Abdichtung zwischen dem Abschlußelement und dem Schutzrohr mit Hilfe eines Schrumpfschlauchstückes.

Figur 7    zeigt die Verwendung eines Schutzrohres mit Wellrohrstruktur.

Figur 8    zeigt eine Frontansicht des Schutzrohres nach Figur 7.

Figur 9    zeigt eine weitere, konisch ausgebildete Abdichtung zwischen dem Schutzrohr und dem Abschlußelement.

Figur 10   verdeutlicht eine Abdichtung zum eingeführten Kabel mit Hilfe eines schrumpfbar ausgebildeten Abschlußelementes.

Figur 11   erklärt die Ausbildung einer bogenförmigen Weiterführung des Schutzrohres, zum Beispiel in einen Verteilerkasten in einer Seitenansicht.

Figur 12   zeigt die zu Figur 11 gehörige Frontansicht.

Figur 13   zeigt Einzelheiten an einem Spreizdübelteil.

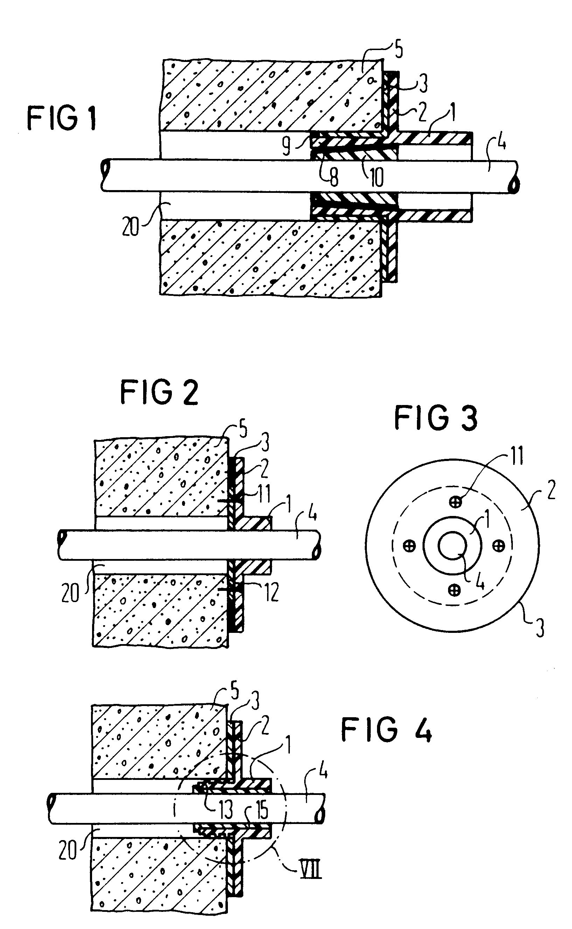

Die Figur 1 erläutert nun den Grundgedanken der Erfindung für eine wasser- und gasdichte Durchführung von langgestreckten Gegenständen, wie Leitungen Kabel oder auch von Installationsrohren anderer Art. So wird zum Schutz für diese Gegenstände in die Maueröffnung 20 einer Mauer 5 ein Schutzrohr 4 eingeführt, in welchem die einzuführenden langgestreckten Gegenstände eingezogen werden. Dieses Schutzrohr 4 wird an dem einen, meist inneren Ende der Maueröffnung 20 je nach den Erfordernissen befestigt oder weitergeführt, während es an der abzudichtenden Mauerseite mit dem Abschlußelement 1-2 in mechanische Verbindung gebracht wird. Das Abschlußelement 1-2 besteht aus einem Rohrstück 1, das im Inneren das Schutzrohr 4 aufnimmt, wobei dieses je nach Ausführungsbeispiel darin befestigt wird. Das Rohrstück 1 des Abschlußelementes 1-2 , besitzt am mauerseitigen Ende einen radial nach auswärts gerichteten Ringflansch 2. Die Ringfläche dieses Ringflansches 2 erstreckt sich konzentrisch um die Maueröffnung 20 herum und ist im Außendurchmesser so gewählt, daß die Maueröffnung mit einer ausreichenden Dichtungsfläche überdeckt wird. Zwischen der Mauerwand und diesem Ringflansch 2 wird ein Dichtelement 3 eingebracht, durch welches die Abdichtung zu der bereits mit Dichtmitteln behandelten Mauerwand hergestellt wird. Auf diese Weise sind keine weiteren Manipulationen, wie sie beim Stand der Technik üblich sind, mehr nötig. Die Ausfüllung des Ringspaltes und ein weiterer, nachträglicher Anstrich dieses ausgefüllten Ringspaltes entfallen somit und erleichtern die Montage bezüglich des zeitlichen wie auch kostenmäßigen Aufwandes ganz erheblich. Als Material für das Dichtmittel 3 kommen aushärtende oder auch nicht aushärtende, an sich bekannte Klebemittel oder auch dauerplastische Dichtungsmassen, zum Beispiel auf Bitumen- oder Butylbasis, in Frage. Als aushärtender Kleber kann zum Beispiel der unter dem Handelsnamen "Protolin" bekannte Zweikomponentenkleber der Firma Siemens verwendet werden. Diese Dichtmittel 3 können als Anstrich, als separate Ringscheiben oder auch als Belag des Ringflansches ausgebildet sein. Das Abschlußelenent 1 - 2 wird bei der Montage mit entsprechendem Andruck gegen die Außenfläche der Mauer 5 gepreßt, so daß der erforderliche Dichtandruck gegeben ist. Durch entsprechende Druck bzw. Arretiermittel wird dieser Dichtungsdruck erzeugt bzw. aufrechterhalten, wie später noch erläutert wird. Das eingeführte Schutzrohr 4 wird je nach Bedarf überstehend oder auch bündig mit dem Rohrstück 1 des Abschlußelementes 1 - 2 verbunden. Nach dem Einführen der langgestreckten Gegenstände erfolgt dann die Abdichtung zwischen dem Abschlußelement 1 - 2 und diesen Gegenständen, wie ebenfalls später erläutert wird. Als Werkstoff für das Abschlußelement 1 - 2 kann Kunststoff oder Metall Verwendung finden, wobei diese Werkstoffe korrosionsfest sein müssen, um auch eine dauerhafte Abdichtung bei schlechten Korrosionsverhältnissen gewährleisten zu können.

Die Figur 1 zeigt weiter, daß gemäß der Erfindung ein Abschlußelement 1-2 mit einem ins Innere der Maueröffnung 20 geführten Ansatz 8, der zum Beispiel auf seiner Außenfläche mit einem weiteren Dichtungsmittel 9 oder auch mit einer Verlängerung des unter dem Ringflansch 2 angeordneten Dichtmittels 3 beschichtet ist. Auf diese Weise wird der Dichtungsweg bis ins Innere der Maueröffnung 20 verlängert, wobei zusätzlich ein besserer Sitz für das Abschlußelement 1-2 erreicht wird. Die Innenfläche des Ansatzes 8 verengt sich konisch zum einen Ende hin. Dadurch läßt sich das eingeführte Schutzrohr 4 mit Hilfe eines dem Innenkonus des Ansatzes 8 angepaßten Ringkörpers z.B. eines Ringkonus 10 im Abschlußelement 1-2 fixieren, wobei ein auf die Berührungsflächen des Ringkonus 10 aufgebrachtes Dichtmittel für eine Abdichtung sorgen kann. Bei Verwendung eines zylindrischen Ringkörpers ist es ebenfalls möglich, den Ansatz 8 nach auswärts zu pressen, wobei es in diesem wie im ersten Fall von Vorteil ist, wenn der Ansatz 8 vorher erwärmt wird. Im übrigen gleichen die Verhältnisse bezüglich der Adhäsionsabdichtungen den vorhergegangenen Ausführungsbeispielen. Bei diesem und dem vorhergehenden Ausführungsbeispiel kann der erforderliche Anpreßdruck für das Dichtelement 3 gegen die Mauer 5 zum Beispiel auch durch Zug am Schutzrohr 4 vom noch offenen Ende der Maueröffnung 20 her erfolgen. wenn man zuvor das Schutzrohr 4 mit dem Abschlußelement 1-2, wie später noch erläutert wird, zugfest sichert oder verbindet.

Die Figur 2 verdeutlicht, daß der erforderliche Dichtungsdruck zwischen der Mauer 5 und dem Ringflansch 2 des Abschlußelementes 1-2 mit Hilfe von Befestigungsmitteln in Form von Stiften oder Schrauben 11 hergestellt wird. Dabei ist noch angedeutet, daß das Dichtelement 3 zum Beispiel auch nur als relativ schmaler Ring oder auch als Schnur Dichtung ausgebildet sein kann, wenn es die geforderten Dichtverhältnisse zulassen. Die mögliche Dichtfläche 12 kann jedoch einwärts bis zum Schutzrohr 4 ausgenützt werden.

Die Figur 3 verdeutlicht in einer Frontansicht das in Figur 2 eingesetzte Abschlußelement 1-2 mit den gleichmäßig im Ringflansch 2 verteilten Druckmitteln 11 und mit dem als Ring ausgebildeten Dichtelement 3. Im Inneren des Rohrstückes 1 ist das Schutzrohr 4 angeordnet.

Die Figur 4 zeigt eine Vorrichtung, bei dem als Druck- und Arretiermittel eine dübelähnliche Ausbildung des Rohrstückes 1 des Abschlußelementes 1-2 gewählt ist. Dabei entspricht die Flächendichtung zur Außenmauer 5 den bisherigen Beispielen. Das Rohrstück 1 ist nun am mauerseitigen Ende mit einer Spreizhülse 13 versehen, die nach Art von Spreizdübeln in der Maueröffnung 20 fixiert werden kann. Diese Spreizung und Fixierung erfolgt jedoch erst, nachdem der nötige Druck auf die Flächendichtung aufgebracht wurde, so daß dann durch die Fixierung auch der Anpreßdruck aufrechterhalten werden kann. Die Spreizung der Spreizhülse 13 erfolgt mit Hilfe eines konzentrisch eingeführten Spreizteiles 15, in dem das Schutzrohr 4 eingeführt und eventuell sogar befestigt ist. Im zuletzt genannten Fall läßt sich dann der nötige Anpreßdruck auch durch Zug von der Innenseite der Maueröffnung 20 am Schutzrohr 4 erzeugen.

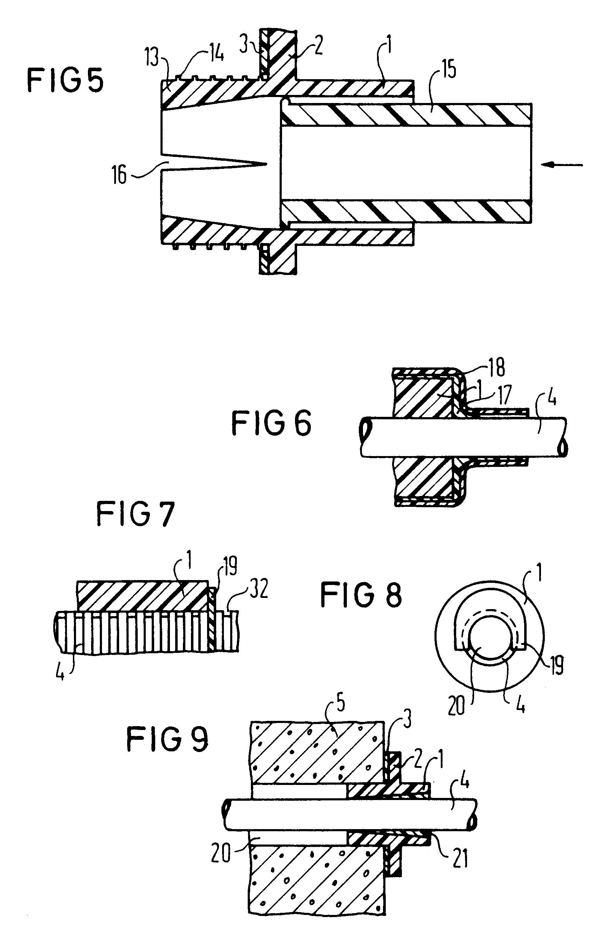

Die Figur 5 verdeutlicht die Ausbildung der Spreizhülse 13, die am Rohrstück 1 des Abschlußelementes 1-2 angeformt ist. Auf der Außenfläche der Spreizhülsen 13 sind punktuelle oder auch umlaufende Erhebungen 14 angeordnet, durch die bei der Spreizung die Verhakung in der Maueröffnung 20 begünstigt wird. Durch Längsschlitze 16 in der Spreizhülse 13 wird die Spreizung ermöglicht, wenn von der anderen Seite her das Spreizteil 15 eingepreßt wird. Durch die konische Verengung der Spreizhülse 13 am zweiten Ende erfolgt dann das radiale Auspressen gegen die Wandung der Maueröffnung 20. Das Spreizteil 15 ist ebenfalls als Hülse ausgebildet, wobei der Innendurchmesser dem Außendurchmesser des Schutzrohres 4 entspricht, das entweder lose oder fixiert darin eingebracht ist. Der Pfeil in der Figur deutet die Richtung an, in der das Spreizteil 15 in die Spreizhülse 13 eingetrieben werden muß, um die Spreizung zu bewirken.

Das Schutzrohr 4 im Rohrstück 1 des Abschlußelementes 1-2 kann mit Hilfe eines Klebers, vorzugsweise eines aushärtenden Klebers, fixiert werden, so daß der nötige Anpreßdruck auf die Ringdichtung mit dem Dichtelement 3 durch Zug mit der erforderlichen Kraft am freien Ende des Schutzrohres 4 aufgebracht werden kann. Auf diese Weise ist zusätzlich eine Abdichtung zwischen dem Abschlußelement 1-2 und dem Schutzrohr 4 gegeben.

Die Figur 6 zeigt ein weiteres Beispiel für eine Fixierung des Schutzrohres 4 mit dem Rohrstück 1 des Abschlußelementes 1-2. Hier wird ein Schrumpfteil, vorzugsweise ein Schrumpfschlauch 18 mit einer Beschichtung 17 aus einem bei Wärmezufuhr schmelzenden thermoplastischen Kleber dichtend auf das Rohrstück 1 und das herausragende Schutzrohr 4 aufgeschrumpft. Auch hierdurch ist eine dichte Fixierung des Schutzrohres 4 geschaffen, so daß wie im Beispiel nach Figur 8 durch Zug der nötige Anpreßdruck für die Ringdichtung erreicht werden kann.

In Figur 7 wird die Fixierung des Schutzrohres 4 gezeigt, das als Wellrohr und wie hier im speziellen Fall als Rohr mit umlaufenden Nuten 32 ausgebildet ist. Die Ausgestaltung als Wellrohr bzw. nach der gezeigten speziellen Art hat den Vorteil, daß das Schutzrohr 4 besonders flexibel ist, so daß es besonders am innenseitigen Ende sehr gut für eine bogenförmige Weiterleitung geeignet ist. Außerdem besteht die Möglichkeit, das Schutzrohr 4 durch geeignete Rastmittel 19, wie hier durch ein Ausschnitteil, am Ende des Rohrstückes 1 zu fixieren. Das Einklemmen eines solchen Rastmittels 19 ist einfach und hat den Vorteil, daß ohne Wartezeit die weiteren Montagearbeiten fortgeführt werden können. Durch diese Art der Fixierung kann dann ebenfalls durch Zug am innenseitigen Ende des Schutzrohres 4 der nötige Anpreßdruck für die Ringdichtung aufgebracht werden.

Die Figur 8 verdeutlicht lediglich in der Frontansicht das Fixierverfahren nach Figur 7. Es ist zu erkennen, daß das Rastmittel 19 in einer umlaufenden Nut des Schutzrohres 4 eingerastet ist, so daß dieses bei Zug nicht mehr aus dem Rohrstück 1 des Abschlußelementes 1-2 herausgezogen werden kann.

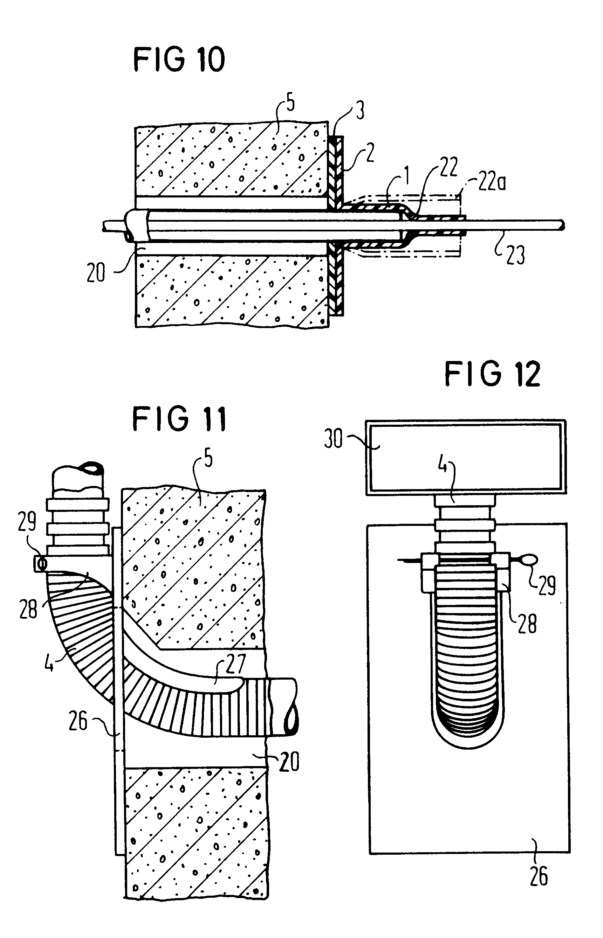

In der Figur 9 ist die Fixierung und/oder Dichtung zwischen dem Schutzrohr 4 und dem Rohrstück 1 mit Hilfe eines konusförmigen Ringteiles 21 vorgenommen, das entweder als selbständiges Teil oder als Anformung am Schutzrohr 4 ausgebildet ist. Dieses konusförmige Ringteil 21 kann auch mit Kleber beschichtet sein, so daß dann eine innige Verbindung und Abdichtung erreicht werden kann. Es läßt sich dann auch wieder der nötige Anpreßdruck für die Ringdichtung 3 durch Zug am innenseitigen Ende der Maueröffnung 20 herstellen.

Figur 10 zeigt eine Vorrichtung, bei dem das Rohrstück 1 des Abschlußelementes 1-2 zumindest am äußeren Ende teilweise schrumpffähig ausgebildet ist. Mit diesem schrumpffähigen Teil 22 wird die Abdichtung zwischen dem Abschlußelement 1-2 und dem eingeführten Gegenstand, zum Beispiel einem Kabel 23, hergestellt. Man kann jedoch bei entsprechender Längenwahl des schrumpffähigen Teiles 22 auch die Fixierung des Schutzrohres 4 mit vornehmen, so daß im ersten Arbeitsschritt mit dieser Vorrichtung auch das Aufbringen des Anpreßdruckes zur Mauer 5 vorgenommen werden kann. In gestrichelter Form ist in dieser Figur das geweitete, noch ungeschrumpfte Teil 22a angedeutet. Diese Ausführung hat den Vorteil, daß praktisch alle benötigten Funktionsteile in einem einzigen Formteil vereinigt sind. Ähnliche Funktionen lassen sich auch mit einem separaten Schrumpfteil erreichen, wenn das Rohrstück selbst nicht schrumpfbar ist. In einem solchen Fall wird dann das Schrumpfteil auf das Rohrstück 1, eventuell das hervorstehende Schutzrohr 4 und auf den eingeführten Gegenstand aufgeschrumpft.

Die Figuren 11 und 12 erklären in einer Seitenbzw. Frontansicht eine Möglichkeit zur Weiterführung des Schutzrohres 4 im Innenbereich am innenseitigen Ende der Maueröffnung 20. Hier wird ein Formteil 26 zur Fixierung des Schutzrohres 4, das zum Beispiel als Wellrohr ausgebildet ist, verwendet, mit dem zugleich eine bogenförmige Abführung erfolgt. Auf diese Weise kann das Schutzrohr 4 mit den entsprechenden Einlagen zum Beispiel direkt in ein darüber angeordnetes Schaltoder Verteilergehäuse 30 weitergeführt werden. Bei entsprechender Abschrägung des Mauerrandes 5 im Maueröffnungsbereich 20 läßt sich das Schutzrohr 4 sehr eng an der Mauerwand 5 anlegen, wobei das Schutzrohr 4 mit Hilfe einer angeformten und angepaßten Halterung 28 ohne zusätzliche Dübel und Schellen in der Lage fixiert werden kann. Ein Splint 29 sichert das Schutzrohr 4 in dieser Stellung. Von dem Formteil 26, das zugleich auch die Maueröffnung 20 abdeckt, wird nach einwärts in die Maueröffnung 20 eine bogenförmige Führung 27 eingebogen, die das Schutzrohr 4 im zulässigen Biegeradius hält und somit vor dem Einknicken schützt. Das Formteil 26 selbst wird zum Beispiel durch Dübel auf der Mauer 5 befestigt. Die Dichtungs- und Abschlußmaßnahmen am äußeren Ende einer solchen Abführung sind davon unbeeinflußt und entsprechen je nach Ausführungsform den oben beschriebenen Beispielen.

Das Formteil 26 kann zugleich auch als Rückwand für ein Anschluß- oder Verteilergehäuse ausgebildet werden, so daß die gesamte Anordnung, bestehend aus der inneren Mauereinführung nach Figur 11 und den benötigten Anschlußeinheiten, in einer abgeschlossenen Einheit zusammengefaßt ist.

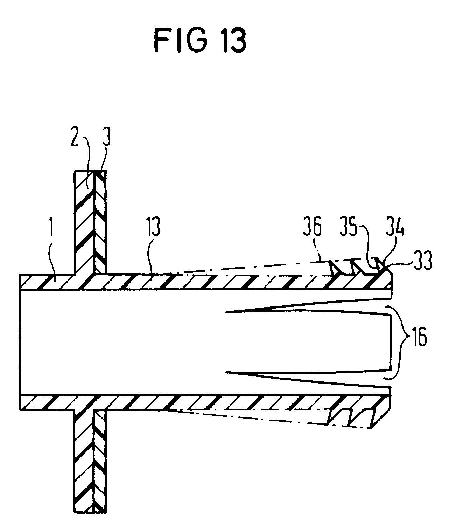

Die Figur 13 zeigt einen Abschlußelement für eine spezielle Dübelform im Bereich des in die Maueröffnung ragenden Ansatzes 13 nach Figur 5. Diese Ausführung hat den Vorteil, daß sich beim Spreizen des Dübels infolge der zum Ringflansch 2 gerichteten spitzen bzw. zahnartig ausgebildeten Erhebungen 33 eine Kraft aufbaut, durch die das gesamte Abschlußelement 1 - 2 weiter in die Maueröffnung gezogen wird. Hierdurch wird somit beim Spreizen des Dübels mit Hilfe eines Spreizteils 15 nach Figur 5 eine zusätzliche Anpressung des Ringflansches 2 auf das Dichtelement 3 gegen die Mauer erreicht. Die optimale Wirkungsweise wird erreicht, wenn die zum Ringflansch 2 geneigten zahnartigen und umlaufenden Erhebungen 33 mit Vorderflanken 34, die im Winkel von ca. 45° geneigt sind, und mit Rückflanken 35, die im Winkel von 60° bis 70° geneigt sind, versehen sind. Weiterhin ist noch zusätzlich von Vorteil, wenn die Erhebungen 33 zum Ringflansch hin immer kleiner werden, wie durch die gestrichelte Hüllkurve 36 angedeutet ist. Außerdem sind auch hier wie im Abschlußelement nach Figur 5 Längsschlitze 16 eingebracht, durch die das Spreizen beim Eintreiben des Spreizteils 15 ermöglicht wird.

**Patentansprüche**

1. Wasser- und gasdichte Durchführung von langgestreckten Gegenständen, wie Rohren, elektrischen Leitungen oder Kabeln, durch Bauwerkswände mit Abdichtungen (17, 18, 21, 22, 25, 31) zum eingeführten Gegenstand (23), wobei zumindest an einer Mauerseite ein die Maueröffnung (20) abschließendes, rohrförmiges Abschlußelement (1-2) angeordnet ist, das ein Rohrstück (1) und einen senkrecht zur Achse der Maueröffnung (20) radial nach auswärts gerichteten Ringflansch (2) aufweist, wobei die Fläche des Ringflansches (2) so gewählt ist, daß die Maueröffnung (20) ringsum mit einer ein Dichtelement (3) ausreichend überdeckenden Dichtfläche abgedeckt ist und der Ringflansch (2) durch Druck- und/oder Arretiermittel (4, 10, 11, 13, 19, 21) gegen das Dichtelement (3) und die Mauerwand gepreßt ist, **dadurch gekennzeichnet,** daß das Rohrstück (1) einen in die Maueröffnung (20) ragenden zylindrischen Ansatz (8, 13) aufweist, daß der Ansatz (8, 13) als Spreizdübel (13) ausgebildet ist und ein ins Innere des Spreizdübels (13) eintreibbares, rohrförmiges Spreizteil (10, 15) aufweist, daß ein Schutzrohr (4) innerhalb der Maueröffnung (20) bis in das Abschlußelement (1-2) reichend angeordnet ist, daß das Dichtelement (3) zwischen dem Ringflansch (2) und der Mauerwand (5) angeordnet ist und daß Abdichtungen (17, 18, 21, 22) zwischen dem Abschlußelement (1-2) und dem eingefügten Gegenstand (23) zumindest auf der mit dem Abschlußelement (1-2) versehenen Mauerseite, vorzugsweise auf der Außenseite der Mauer (5), vorgesehen sind.

2. Durchführung nach Anspruch 1, **dadurch gekennzeichnet,** daß das Dichtelement (3) aus einem aushärtenden Kleber besteht.

3. Durchführung nach Anspruch 1, **dadurch gekennzeichnet,** daß das Dichtungselement (3) aus einem dauerplastischen Kunststoffmaterial, vorzugsweise auf Bitumen- oder Butylbasis, besteht.

4. Durchführung nach einem der vorhergehenden Ansprüche, **dadurch gekennzeichnet,** daß das Dichtelement (3) als selbständiges Bauteil eingesetzt ist.

5. Durchführung nach einem der Ansprüche 1 bis 3, **dadurch gekennzeichnet,** daß das Dichtelement (3) als Anstrich oder Belag ausgebildet ist.

6. Durchführung nach einem der vorhergehenden Ansprüche, **dadurch gekennzeichnet,** daß das Dichtelement (3) als ringförmiges Flächenelement ausgebildet ist.

7. Durchführung nach einem der Ansprüche 1 bis 5, **dadurch gekennzeichnet,** daß das Dichtungselement (3) als schnurartiges Element ausgebildet ist.

8. Durchführung nach einem der Ansprüche 1 bis 6, **dadurch gekennzeichnet,** daß das Dichtelement (3) einen in die Maueröffnung (20) reichenden Ansatz (7, 9) aufweist.

9. Durchführung nach einem der vorhergehenden Ansprüche, **dadurch gekennzeichnet,** daß das Schutzrohr (4) einen Außendurchmesser aufweist, der dem Innendurchmesser des Spreizteils (10, 15) entspricht.

10. Durchführung nach einem der vorhergehenden Ansprüche, **dadurch gekennzeichnet,** daß am äußeren Umfang des Ansatzes (8, 13) Erhebungen (33) angeordnet sind.

11. Durchführung nach Anspruch 10, **dadurch gekennzeichnet,** daß die Erhebungen (33) umlaufend angordnet sind.

12. Durchführung nach einem der vorhergehenden Ansprüche, **dadurch gekennzeichnet,** daß der Innendurchmesser des Ansatzes (8, 13) in Richtung Maueröffnung (20) konisch verjüngt ist.

13. Durchführung nach Anspruch 12, **dadurch gekennzeichnet,** daß zwischen der Innenwandung des Ansatzes (8) und dem Schutzrohr (4) ein angepaßter konischer Ringkörper (10, 21) eingepreßt ist.

14. Durchführung nach einem der vorhergehenden Ansprüche,
**dadurch gekennzeichnet,**
daß das Schutzrohr (4) im Rohrstück (1) mit Hilfe eines Klebers (31) fixiert ist.

15. Durchführung nach einem der Ansprüche 1 bis 13,
**dadurch gekennzeichnet,**
daß das Schutzrohr (4) mit Hilfe eines auf das Rohrstück (1) und Schutzrohr (4) aufgeschrumpften, vorzugsweise mit Kleber beschichteten Schrumpfteiles (18) fixiert ist.

16. Durchführung nach einem der vorhergehenden Ansprüche,
**dadurch gekennzeichnet,**
daß das Rohrstück (1) zumindest teilweise aus schrumpfbarem Material besteht.

17. Durchführung nach einem der vorhergehenden Ansprüche,
**dadurch gekennzeichnet,**
daß die Abdichtung zwischen dem Abschlußelement (1-2) und dem eingeführten Gegenstand (23) mit Hilfe eines vorzugsweise mit Kleber beschichteten Schrumpfteils (22) erfolgt.

18. Durchführung nach einem der vorhergehenden Ansprüche,
**dadurch gekennzeichnet,**
daß als Druckmittel für den Ringflansch (2) klemmende Elemente (10, 13, 19, 21) vorgesehen sind.

19. Durchführung nach einem der Ansprüche 1 bis 17,
**dadurch gekennzeichnet,**
daß als Druckmittel Schraubelemente (11) im Ringflansch (2) angeordnet sind.

20. Durchführung nach einem der Ansprüche 1 bis 17,
**dadurch gekennzeichnet,**
daß als Druckmittel das im Rohrstück (1) fixierte und aus der inneren Bauseite hervorragende Schutzrohr (4) als zugfestes Element vorgesehen ist.

21. Durchführung nach einem der vorhergehenden Ansprüche,
**dadurch gekennzeichnet,**
daß das Schutzrohr (4) aus Metall besteht.

22. Durchführung nach einem der Ansprüche 1 bis 20,
**dadurch gekennzeichnet,**

daß das Schutzrohr (4) aus einem Kunststoff, vorzugsweise thermoplastischem Kunststoff, besteht.

23. Durchführung nach einem der vorhergehenden Ansprüche,
**dadurch gekennzeichnet,**
daß das Schutzrohr (4) flexibel ausgebildet ist.

24. Durchführung nach Anspruch 23,
**dadurch gekennzeichnet,**
daß das Schutzrohr (4) als Wellrohr ausgebildet ist.

25. Durchführung nach Anspruch 23,
**dadurch gekennzeichnet,**
daß das Schutzrohr (4) mit umlaufenden Erhebungen und Nuten (32) versehen ist.

26. Durchführung nach Anspruch 25,
**dadurch gekennzeichnet,**
daß ein angepaßtes Fixierteil (19) in den Nuten (32) des Wellrohres angeordnet ist.

27. Durchführung nach einem der vorhergehenden Ansprüche,
**dadurch gekennzeichnet,**
daß auf der inneren Seite der Maueröffnung (20) ein Formteil (26) zur Fixierung des in der Maueröffnung (20) befindlichen Schutzrohres (4) angeordnet ist, wobei das Formteil (26) die Maueröffnung abdeckt.

28. Durchführung nach Anspruch 27,
**dadurch gekennzeichnet,**
daß das Formteil (26) eine senkrecht zur Mauerwand (5) herausragende Ausformung (28) zur Aufnahme des Schutzrohres (4) aufweist, wobei die Halterung so erfolgt, daß das Schutzrohr (4) möglichst nahe an der Mauerwand (5) weitergeführt werden kann.

29. Durchführung nach einem der Ansprüche 27 oder 28,
**dadurch gekennzeichnet,**
daß das Formteil (26) ein in die Maueröffnung (20) ragendes Bogenstück (27) zur Stützung des Schutzrohres (4) aufweist.

30. Durchführung nach einem der vorhergehenden Ansprüche,
**dadurch gekennzeichnet,**
daß das Schutzrohr (4) im Innenbereich in ein Anschluß- oder Verteilergehäuse (30) eingeführt ist.

31. Durchführung nach einem der Ansprüche 27 bis 29,

**dadurch gekennzeichnet,**

daß das Formteil (26) zugleich als Rückwand eines Anschluß- oder Verteilergehäuses ausgebildet ist.

32. Durchführung nach den Ansprüchen 10 oder 11,

 **dadurch gekennzeichnet,**

 daß die Erhebungen (33) als zum Ringflansch (2) geneigte, spitze Zähne ausgebildet sind.

33. Durchführung nach Anspruch 32,

 **dadurch gekennzeichnet,**

 daß die Vorderflanken (34) der Erhebungen (33) vorzugsweise unter 45° geneigt sind und daß die Rückflanken (35) vorzugsweise unter 60° bis 70° geneigt sind.

34. Durchführung nach einem der Ansprüche 32 oder 33,

 **dadurch gekennzeichnet,**

 daß die Erhebungen (33) vom Ende des Ansatzes (13) zum Ringflansch (2) hin in der Höhe geringer werden.

## Claims

1. Watertight and gastight feedthrough of elongate objects, such as pipes, electrical lines or cables, through building walls having sealing means (17, 18, 21, 22, 25, 31) with respect to the object (23) introduced, there being arranged at least on one side of the wall a tubular closing-off element (1-2), which closes off the wall opening (20) and has a tube piece (1) and an annular flange (2) directed radially outward perpendicularly to the axis of the wall opening (20), the surface of the annular flange (2) being chosen such that the wall opening (20) is covered all round by a sealing face sufficiently covering over a sealing element (3) and the annular flange (2) being pressed by pressing and/or arresting means (4, 10, 11, 13, 19, 21) against the sealing element (3) and the wall, characterised in that the tube piece (1) has a cylindrical socket (8, 13), protruding into the wall opening (20), in that the socket (8, 13) is designed as an expanding dowel (13) and has a tubular expanding part (10, 15) which can be driven inside the expanding dowl (13), in that a protective tube (4) is arranged inside the wall opening (20), reaching into the closing-off element (1-2), in that the sealing element (3) is arranged between the annular flange (2) and the wall (5) and in that sealing means (17, 18, 21, 22) are provided between the closing-off element (1-2) and the object (23) introduced, at least on the side of the wall provided with the closing-off element (1-2), preferably on the outside of the wall (5).

2. Feedthrough according to Claim 1, characterised in that the sealing element (3) consists of a curable adhesive.

3. Feedthrough according to Claim 1, characterised in that the sealing element (3) consists of a permanently plastic synthetic material, preferably based on bitumen or butyl.

4. Feedthrough according to one of the preceding claims, characterised in that the sealing element (3) is fitted as an independent component.

5. Feedthrough according to one of Claims 1 to 3, characterised in that the sealing element (3) is designed as a coating or covering.

6. Feedthrough according to one of the preceding claims, characterised in that the sealing element (3) is designed as an annular face element.

7. Feedthrough according to one of Claims 1 to 5, characterised in that the sealing element (3) is designed as a cord-like element.

8. Feedthrough according to one of Claims 1 to 6, characterised in that the sealing element (3) has a socket (7, 9) reaching into the wall opening (20).

9. Feedthrough according to one of the preceding claims, characterised in that the protective tube (4) has an outside diameter which corresponds to the inside diameter of the expanding part (10, 15).

10. Feedthrough according to one of the preceding claims, characterised in that elevations (33) are arranged on the outer circumference of the socket (8, 13).

11. Feedthrough according to Claim 10, characterised in that the elevations (33) are arranged as running around.

12. Feedthrough according to one of the preceding claims, characterised in that the inside diameter of the socket (8, 13) is conically tapered in the direction of the wall opening (20).

13. Feedthrough according to Claim 12, characterised in that an adapted conical annular body (10, 21) is pressed-in between the inside wall of the socket (8) and the protective tube (4).

14. Feedthrough according to one of the preceding claims, characterised in that the protective tube (4) is fixed in the tube piece (1) with the aid of an adhesive (31).

15. Feedthrough according to one of Claims 1 to 13, characterised in that the protective tube (4) is fixed with the aid of a shrinking part (18) which is shrink-fitted onto the tube piece (1) and protective tube (4) and preferably covered with adhesive.

16. Feedthrough according to one of the preceding claims, characterised in that the tube piece (1) consists at least partly of shrinkable material.

17. Feedthrough according to one of the preceding claims, characterised in that the sealing between the closing-off element (1-2) and the object (23) introduced takes place with the aid of a shrinking part (22), preferably covered with adhesive.

18. Feedthrough according to one of the preceding claims, characterised in that clamping elements (10, 13, 19, 21) are provided as pressing means for the annular flange (2).

19. Feedthrough according to one of Claims 1 to 17, characterised in that screw elements (11) are arranged in the annular flange (2) as pressing means.

20. Feedthrough according to one of Claims 1 to 17, characterised in that the protective tube (4), fixed in the tube piece (1) and protruding out of the inner side of the building, is provided as a tension-resistant element as pressing means.

21. Feedthrough according to one of the preceding claims, characterised in that the protective tube (4) consists of metal.

22. Feedthrough according to one of Claims 1 to 20, characterised in that the protective tube (4) consists of a synthetic material, preferably thermoplastic material.

23. Feedthrough according to one of the preceding claims, characterised in that the protective tube (4) is of a flexible design.

24. Feedthrough according to Claim 23, characterised in that the protective tube (4) is designed as a corrugated tube.

25. Feedthrough according to Claim 23, characterised in that the protective tube (4) is provided with running-around elevations and grooves (32).

26. Feedthrough according to Claim 25, characterised in that an adapted fixing part (19) is arranged in the grooves (32) of the corrugated tube.

27. Feedthrough according to one of the preceding claims, characterised in that a moulded part (26) is arranged on the inner side of the wall opening (20) for fixing the protective tube (4) located in the wall opening (20), the moulded part (26) covering the wall opening.

28. Feedthrough according to Claim 27, characterised in that the moulded part (26) has a moulded portion (28), protruding perpendicularly with respect to the wall (5), for receiving the protective tube (4), the mounting taking place in such a way that the protective tube (4) can be led along as close as possible to the wall (5).

29. Feedthrough according to one of Claims 27 or 28, characterised in that the moulded part (26) has a bend piece (27), protruding into the wall opening (20), for supporting the protective tube (4).

30. Feedthrough according to one of the preceding claims, characterised in that the protective tube (4) is introduced in the interior into a terminal or distribution housing (30).

31. Feedthrough according to one of Claims 27 to 29, characterised in that the moulded part (26) is at the same time designed as the rear wall of a terminal or distribution housing.

32. Feedthrough according to Claims 10 or 11, characterised in that the elevations (33) are designed as pointed teeth inclined towards the annular flange (2).

33. Feedthrough according to Claim 32, characterised in that the front edges (34) of the elevations (33) are preferably inclined at 45° and in that the rear edges (35) are preferably inclined at 60° to 70°.

34. Feedthrough according to one of Claims 32 or 33, characterised in that the elevations (33) become smaller in height from the end of the socket (13) towards the annular flange (2).

## Revendications

1. Traversée étanche à l'eau et au gaz, pour des objets longilignes, comme des tubes, des lignes électriques ou des câbles, dans des murs de bâtiments ayant des dispositifs d'étanchéité (17, 18, 21, 22, 25, 31) pour l'objet (23) inséré, un élément de fermeture (1-2) tubulaire et fermant une ouverture du mur (20) étant prévu au moins d'un côté du mur et comportant une pièce tubulaire (1) et une bride annulaire (2) dirigée radialement vers l'extérieur perpendiculairement à l'axe de l'ouverture du mur (20), la surface de la bride annulaire (2) étant telle que l'ouverture du mur (20) est recouverte tout autour d'une surface d'étanchéité recouvrant suffisamment un élément d'étanchéité (3) et la bride annulaire (2) étant repoussée contre l'élément d'étanchéité (3) et contre la paroi du mur par des moyens d'application d'une pression et/ou de blocage (4, 10, 11, 13, 19, 21),
   caractérisée,
   en ce que la pièce tubulaire (1) comporte un prolongement (8, 13) cylindrique pénétrant dans l'ouverture du mur (20), en ce que le prolongement (8, 13) est constitué sous la forme d'une cheville expansible (13) et comporte une partie expansible (10, 15) tubulaire et pouvant pénétrer à l'intérieur de la cheville expansible (13), en ce qu'un tube de protection (4) est disposé à l'intérieur de l'ouverture du mur (20) en allant jusqu'à l'élément de fermeture (1-2), en ce que l'élément d'étanchéité (3) est interposé entre la bride annulaire (2) et l'ouverture du mur (5) et en ce qu'il est prévu des dispositifs d'étanchéité (17, 18, 21, 22) entre l'élément de fermeture (1-2) et l'objet (23) inséré, au moins du côté du mur muni de l'élément de fermeture (1-2), de préférence du côté extérieur du mur (5).

2. Traversée suivant la revendication 1,
   caractérisée,
   en ce que l'élément d'étanchéité (3) est constitué d'une colle durcissable.

3. Traversée suivant la revendication 1,
   caractérisée,
   en ce que l'élément d'étanchéité (3) est en une matière plastique à plasticité permanente, de préférence à base de bitume ou de butyl.

4. Traversée suivant l'une des revendications précédentes,
   caractérisée,
   en ce que l'élément d'étanchéité (3) est inséré en tant qu'élément constitutif autonome.

5. Traversée suivant l'une des revendications 1 à 3,
   caractérisée,
   en ce que l'élément d'étanchéité (3) est constitué sous la forme d'un enduit ou d'une couche.

6. Traversée suivant l'une des revendications précédentes,
   caractérisée,
   en ce que l'élément d'étanchéité (3) est constitué sous la forme d'un élément plat annulaire.

7. Traversée suivant l'une des revendications 1 à 5,
   caractérisée,
   en ce que l'élément d'étanchéité (3) est constitué sous la forme d'un élément en forme de cordon.

8. Traversée suivant l'une des revendications 1 à 6,
   caractérisée,
   en ce que l'élément d'étanchéité (3) comporte un prolongement (7, 9) pénétrant dans l'ouverture du mur (20).

9. Traversée suivant l'une des revendications précédentes,
   caractérisée,
   en ce que le tube de protection (4) a un diamètre extérieur qui correspond au diamètre intérieur de la partie expansible (10, 15).

10. Traversée suivant l'une des revendications précédentes,
    caractérisée,
    en ce que des partie proéminentes (33) sont prévues sur la périphérie extérieure du prolongement (8, 13).

11. Traversée suivant la revendication 10,
    caractérisée,
    en ce que les parties proéminentes (33) sont disposées tout autour.

12. Traversée suivant l'une des revendications précédentes,
    caractérisée,
    en ce que le diamètre intérieur du prolongement (8, 13) se rétrécit coniquement en direction de l'ouverture du mur (20).

13. Traversée suivant la revendication 12,
    caractérisée,
    en ce qu'une pièce annulaire (10, 21) conique et adaptée est enfoncée entre la paroi intérieure du prolongement (8) et le tube de protection (4).

14. Traversée suivant l'une des revendications précédentes,
    caractérisée,
    en ce que le tube de protection (4) est immobilisé dans la pièce tubulaire (1) à l'aide d'une colle (31).

15. Traversée suivant l'une des revendications 1 à 13,
    caractérisée,
    en ce que le tube de protection (4) est immobilisé à l'aide d'une partie rétractable (18) rétractée sur la pièce tubulaire (1) et sur le tube de protection (4) et, de préférence, encollé.

16. Traversée suivant l'une des revendications précédentes,
    caractérisée,
    en ce que la pièce tubulaire (1) est au moins partiellement en un matériau rétractable.

17. Traversée suivant l'une des revendications précédentes,
    caractérisée,
    en ce que l'étanchéité entre l'élément de fermeture (1-2) et l'objet (23) inséré s'effectue à l'aide d'une partie rétractable (22), de préférence encollée.

18. Traversée suivant l'une des revendications précédentes,
    caractérisée,
    en ce qu'il est prévu, comme moyens d'application d'une pression à la bride annulaire (2), des éléments de blocage (10, 13, 19, 21).

19. Traversée suivant l'une des revendications 1 à 17,
    caractérisée,
    en ce que des éléments de vissage (11) sont disposés dans la bride annulaire (2) comme moyens d'application d'une pression.

20. Traversée suivant l'une des revendications 1 à 17,
    caractérisée,
    en ce que le tube de protection (4), servant de moyens d'application d'une pression, immobilisé dans la pièce tubulaire (1) et en saillie du côté intérieur du bâtiment, est prévu sous la forme d'un élément résistant à la traction.

21. Traversée suivant l'une des revendications précédentes,
    caractérisée,
    en ce que le tube de protection (4) est en métal.

22. Traversée suivant l'une des revendications 1 à 20,
    caractérisée,
    en ce que le tube de protection (4) est en matière plastique, de préférence en matière thermoplastique.

23. Traversée suivant l'une des revendications précédentes,
    caractérisée,
    en ce que le tube de protection (4) est souple.

24. Traversée suivant la revendication 23,
    caractérisée en ce que le tube de protection (4) est constitué sous la forme d'un tube ondulé.

25. Traversée suivant la revendication 23,
    caractérisée,
    en ce que le tube de protection (4) est muni de nervures et de gorges (32) faisant tout le tour.

26. Traversée suivant la revendication 25,
    caractérisée,
    en ce qu'une pièce de fixation (19) adaptée est disposée dans les gorges (32) du tube ondulé.

27. Traversée suivant l'une des revendications précédentes,
    caractérisée,
    en ce que, du côté intérieur de l'ouverture du mur (20), est montée une pièce (26) qui est destinée à immobiliser le tube de protection (24) se trouvant dans l'ouverture du mur (20) et qui recouvre l'ouverture du mur.

28. Traversée suivant la revendication 27,
    caractérisée,
    en ce que la pièce (26) comporte une excroissance (28) en saillie perpendiculairement à la paroi du mur (5) et destinée à la réception du tube de protection (4), le maintien s'effectuant de manière que le tube de protection (4) puisse passer aussi près que possible de la paroi du mur (5).

29. Traversée suivant l'une des revendications 27 ou 28,
    caractérisée,

en ce que la pièce (26) comporte un coude (27) pénétrant dans l'ouverture du mur (20) et destiné à supporter le tube de protection (4).

30. Traversée suivant l'une des revendications précédentes,
caractérisée,
en ce que la partie intérieure du tube de protection (4) est introduite dans un boîtier de raccordement ou répartiteur (30).

31. Traversée suivant l'une des revendications 27 à 29,
caractérisée,
en ce que la pièce (26) est constituée en même temps en paroi arrière d'un boîtier de raccordement ou d'un répartiteur.

32. Traversée suivant l'une des revendications 10 ou 11,
caractérisée,
en ce que les parties proéminentes (33) sont constituées sous la forme de dents pointues et inclinées vers la bride annulaire (2).

33. Traversée suivant la revendication 32,
caractérisée,
en ce que les flancs avant (34) des parties proéminentes (33) sont inclinés de préférence à 45° et en ce que les flancs arrière (35) sont inclinés de préférence de 60° à 70°.

34. Traversée suivant l'une des revendications 32 ou 33,
caractérisée,
en ce que les parties proéminentes (33) ont une hauteur plus petite de l'extrémité du prolongement (13) à la bride annulaire (2).

FIG 1

FIG 2

FIG 3

FIG 4

FIG 5

FIG 6

FIG 7

FIG 8

FIG 9

## FIG 10

## FIG 11

## FIG 12

# FIG 13